# EUROPEAN PATENT SPECIFICATION

(11) **EP 3 290 692 B1**
(45) Date of publication and mention of the grant of the patent: **13.02.2019**
(21) Application number: 17161568.5
(22) Date of filing: 17.03.2017
(51) Int. Cl.: F03D 13/20, F03D 13/25

(54) **WIND-TURBINE TOWER, WIND TURBINE, AND METHOD OF ASSEMBLING WIND-TURBINE TOWER**
WINDTURBINENTURM, WINDTURBINE UND VERFAHREN ZUR MONTAGE DES WINDTURBINENTURMS
TOUR ÉOLIENNE, TURBINE ÉOLIENNE ET PROCÉDÉ D'ASSEMBLAGE DE TOUR ÉOLIENNE

(30) Priority: 01.09.2016 JP 2016170715
(43) Date of publication of application: 07.03.2018
(73) Proprietor: Mitsubishi Heavy Industries, Ltd., Tokyo 108-8215 (JP)
(72) Inventor: SHIRAISHI, Yasuaki, Tokyo, 108-8215 (JP); YOKOYAMA, Hiroaki, Tokyo, 108-8215 (JP); TERAMOTO, Naoto, Nagasaki, 850-0063 (JP)
(74) Representative: Henkel, Breuer & Partner

(56) References cited:
- EP-A1- 2 899 111
- DE-A1- 10 219 082
- DE-A1-102012 004 214

## Description

### TECHNICAL FIELD

The present disclosure relates to a wind-turbine tower, a wind turbine, and a method of assembling a wind-turbine tower.

### BACKGROUND ART

A monopile-type base structure including a cylindrical pile is known as a base structure for supporting a wind-turbine tower.

For instance, WO 2014/189367 A and EP 1770276 A disclose a wind turbine including a monopile planted into a seabed, and a tower supported by the monopile. In such a wind turbine, a lower end portion of a tower is connected to a flange disposed on an upper end portion of the monopile, and thereby the tower is erected on the monopile.

For instance, JP 2011-183835 A discloses a wind turbine including a monopile planted into a sea bed, a transition piece mounted to an upper end of the monopile, and a tower disposed on the transition piece. In this wind turbine, the monopile and the tower are fixed to each other via the transition piece, and the verticalness of the tower is adjusted by the transition piece.

DE 102012004214 A1 used to form the preamble portion of the claims 1 and 3 discloses a turbine tower where a stiffening plate is provided on the top ends of wall elements representing a cylindrical member. The root part of the tower body is directly seated on the top surface of the stiffening plate.

DE 10219082 A1 discloses another wind-turbine tower where the tower is inserted into a solid cuboid base block anchored/embedded in the sea floor.

### SUMMARY

Meanwhile, if a monopile-type base structure is used, it is normally necessary to provide connecting members of matching diameters for connection between the tower (tower body) and the monopile, or between the tower and the transition piece.

However, the diameter of a tower normally increases with a size increase of a wind turbine. Moreover, the diameter of the monopile and the transition piece also increases with an increase in the water depth of the installation site of a wind turbine. In this case, changing the diameter of a connection counterpart (the monopile or the like or the tower) in accordance with the increased diameter of the tower or the monopile or the like may lead to cost increase.

In view of this, it is desirable to provide a structure that can reliably receive loads of a wind-turbine tower even in a case where a wind turbine is increased in size or is installed at a site of a great water depth, while suppressing cost increase.

In this regard, however, WO 2014/189367 A, EP 1770276 A and JP 2011-183835 A do not disclose a specific configuration for reliably receiving loads of a tower to support the tower reliably while suppressing cost increase.

In view of the above, an object of at least one embodiment of the present invention is to provide a wind-turbine tower, a wind turbine, and a method of assembling a wind-turbine tower, whereby it is possible to support a tower reliably while suppressing cost increase.
(1) A wind-turbine tower according to the present invention comprises the features of claim 1 or claim 3 and a method of assembling a wind-turbine tower according to the present invention comprises the features of claim 12 or claim 13. The wind-turbine tower inter alia comprises: a base structure; and a tower body to be erected on the base structure. The base structure includes: a cylindrical member having an inner diameter larger than an outer diameter of a root part of the tower body and being disposed along an upward and downward direction; a stiffening plate mounted to an inner wall surface of the cylindrical member so as to extend inward in a radial direction of the cylindrical member; and a load transmitting part, disposed between the stiffening plate and the root part of the tower body, for transmitting a load of the root part of the tower body to the cylindrical member.

With the above configuration (1), the cylindrical member that receives loads of the root part of the tower body has an inner diameter greater than the outer diameter of the root part of the tower body (tower root part). Thus, as compared to a case where the cylindrical member has an inner diameter not greater than the outer diameter of the tower root part, it is possible to maintain the strength of the cylindrical member while reducing the thickness of the cylindrical member, and thereby it is possible to suppress cost increase. Further, in the above configuration (1), loads of the tower root part are transmitted to the cylindrical member via the load transmitting part, which makes it possible to support the tower body reliably. Thus, according to the above configuration (1), it is possible to support the tower body reliably while suppressing cost increase.
(2) In some embodiments, the wind-turbine tower in the above configuration (1) further comprises a first rib extending along the upward and downward direction below the stiffening plate and being disposed so as to protrude inward in the radial direction from the inner wall surface of the cylindrical member. A lower surface of the stiffening plate and an upper end portion of the first rib are joined to each other.

With the above configuration (2), a first rib extends along the upward and downward direction below the stiffening plate and is disposed so as to protrude inward in the radial direction from the inner wall surface of the cylindrical member, and thereby it is possible to transmit loads of the tower root part received by the load transmitting part smoothly to the cylindrical member via the first rib.
(3) In the invention according to claim 1 or claim 12, the tower body includes a tower-body side flange disposed along a circumferential direction of the tower body at a lower end of the root part of the tower body. The load transmitting part includes: a pipe-shaped member disposed along the upward and downward direction, at a radially inner side of the cylindrical member and between the tower body and the stiffening plate; and a base-structure side flange disposed on an upper end portion of the pipe-shaped member, the base-structure side flange extending along a circumferential direction of the pipe-shaped member and being engaged with the tower-body side flange.

With the above configuration (3), with a simple configuration of joining the tower-body side flange and the base-structure side flange disposed on the upper end portion of the pipe-shaped member disposed between the tower body and the stiffening plate, it is possible to connect the tower body and the base structure and to transmit loads of the tower root part received by the base-structure side flange to the cylindrical member via the pipe-shaped member. Thus, it is possible to transmit loads of the tower root part more reliably to the cylindrical member, and thus to support the tower body more reliably.
(4) In some embodiments, in the above configuration (3), the load transmitting part further includes a second rib disposed on at least one of an inner wall surface or an outer wall surface of the pipe-shaped member, the second rib extending in the upward and downward direction between the tower body and the stiffening plate.

With the above configuration (4), with the second ribs extending in the upward and downward direction between the tower body and the stiffening plate, it is possible to transmit loads of the tower root part to the cylindrical member via the pipe-shaped member and the second rib. Thus, it is possible to transmit loads of the tower root part more reliably to the cylindrical member, and thus to support the tower body more reliably.
(5) In the invention according to claim 3 or claim 13, the load transmitting part further includes: a concrete casted between the tower body and the stiffening plate, at a radially inner side of the cylindrical member; and an anchor bolt for transmitting loads of the tower body to the concrete.

With the above configuration (5), it is possible to transmit loads of the tower root part to the cylindrical member via the anchor bolt the concrete disposed between the tower body and the stiffening plate. Thus, it is possible to transmit loads of the tower root part more reliably to the cylindrical member, and thus to support the tower body more reliably.
(6) In some embodiments, in the above configuration (5), the load transmitting part further includes a shear key for transmitting the loads from the concrete to the cylindrical member.

With the above configuration (6), the loads of the tower root part are transmitted to the cylindrical member from the concrete via the shear key. Thus, it is possible to transmit loads of the tower root part more reliably to the cylindrical member, and thus to support the tower body more reliably.
(7) In some embodiments, in any of the above configurations (1) to (6), the base structure further includes a cover member for covering a top portion of the cylindrical member.

With the above configuration (7), the top portion of the cylindrical member is covered with the cover member, and thus it is possible to protect the top portion of the cylindrical member from erosion.

Further, the top portion of the cylindrical member may deform from being hit upon installing the cylindrical member on ground or seabed. In this regard, with the above configuration (7), it is possible to fix the shape of the top portion of the cylindrical member by covering the top portion with the cover member. Accordingly, it is possible to avoid negative effects on works on the base structure caused by the shape (e.g. protrusion) of the top portion of the cylindrical member.
(8) In some embodiments, in the above configuration (7), the base structure further includes a brim portion disposed so as to protrude outward in a radial direction of the cylindrical member from the top portion of the cylindrical member, and formed integrally with the cover member.

With the above configuration (8), the brim portion is formed protruding outward in the radial direction of the cylindrical member from the top portion of the cylindrical member, and thus it is possible to use the brim portion as a working space on the base structure.
(9) In some embodiments, in any of the above configurations (1) to (8), the load transmitting part has a space disposed along an axial direction of the cylindrical member. An inside space below the stiffening plate of the cylindrical member and an inside space of the tower body are in communication with each other via the space inside the load transmitting part.

With the above configuration (9), an inside space below the stiffening plate of the cylindrical member and an inside space of the tower body are in communication with each other via the space inside the load transmitting part. Thus, it is possible to place or move devices and components between the inside of the tower body and the inside space below the stiffening plate of the cylindrical member. For instance, it is possible to arrange power cables and communication cables from the space inside the tower to the space below the base structure.
(10) In some embodiments, in any one of the above configurations (1) to (9), the cylindrical member comprises a monopile at least partially embedded into ground or seabed.

With the above configuration (10), the monopile that receives loads of the root part of the tower body has an inner diameter greater than the outer diameter of the root part of the tower body (tower root part). Thus, as compared to a case where the monopile has an inner diameter not greater than the outer diameter of the tower root part, it is possible to maintain the strength of the cylindrical member while reducing the thickness of the cylindrical member, and thereby it is possible to suppress cost increase. Further, in the above configuration (10), loads of the tower root part are transmitted to the monopile via the load transmitting part, which makes it possible to support the tower body reliably. Thus, according to the above configuration (10), it is possible to support the tower body reliably while suppressing cost increase.
(11) In some embodiments, in any one of the above configurations (1) to (9), the cylindrical member comprises a transition piece disposed between the tower body and a monopile at least partially embedded into ground or seabed.

With the above configuration (11), the transition piece that receives loads of the root part of the tower body has an inner diameter greater than the outer diameter of the root part of the tower body (tower root part). Thus, as compared to a case where the transition piece has an inner diameter not greater than the outer diameter of the tower root part, it is possible to maintain the strength of the cylindrical member while reducing the thickness of the transition piece, and thereby it is possible to suppress cost increase. Further, in the above configuration (11), loads of the tower root part are transmitted to the transition piece via the load transmitting part, which makes it possible to support the tower body reliably. Thus, according to the above configuration (11), it is possible to support the tower body reliably while suppressing cost increase.
(12) A wind turbine according to at least one embodiment of the present invention comprises: the wind-turbine tower according to the invention; and a wind turbine rotor supported to the wind-turbine tower.

With the above configuration (12), the cylindrical member that receives loads of the root part of the tower body has an inner diameter greater than the outer diameter of the root part of the tower body (tower root part). Thus, as compared to a case where the cylindrical member has an inner diameter not greater than the outer diameter of the tower root part, it is possible to maintain the strength of the cylindrical member while reducing the thickness of the cylindrical member, and thereby it is possible to suppress cost increase. Further, in the above configuration (12), loads of the tower root part are transmitted to the cylindrical member via the load transmitting part, which makes it possible to support the tower body reliably. Thus, according to the above configuration (12), it is possible to support the tower body reliably while suppressing cost increase.
(13) A method of assembling a wind-turbine tower including a base structure and a tower body, the base structure including a cylindrical member having an inner diameter greater than an outer diameter of a root part of the tower body and being disposed along an upward and downward direction, and a stiffening plate disposed on an inner wall surface of the cylindrical member, according to the present invention, comprises: an embedding step of embedding the base structure at least partially into ground or seabed; a step of connecting the cylindrical member and a lower end portion of the tower body, and erecting the tower body on the base structure; and a step of forming a load transmitting part for transmitting loads of the root part of the tower body to the cylindrical member between the stiffening plate and the root part of the tower body.

According to the above method (13), the cylindrical member that receives loads of the root part of the tower body has an inner diameter greater than the outer diameter of the root part of the tower body (tower root part). Thus, as compared to a case where the cylindrical member has an inner diameter not greater than the outer diameter of the tower root part, it is possible to maintain the strength of the cylindrical member while reducing the thickness of the cylindrical member, and thereby it is possible to suppress cost increase. Further, in the above method (13), loads of the tower root part are transmitted to the cylindrical member via the load transmitting part, which makes it possible to support the tower body reliably. Thus, according to the above method (13), it is possible to support the tower body reliably while suppressing cost increase.
(14) In some embodiments, the above method (13) further comprises a step of forming at least a part of the load transmitting part inside the cylindrical member, before the embedding step.

According to the above method (14), before the embedding step of embedding the base structure into ground or seabed, at least a part of the load transmitting part is formed in advance inside the cylindrical member. Thus, works for forming at least the above part of the load transmitting part inside the cylindrical member can be performed in a production plant of the cylindrical member, for instance, and it is no longer necessary to perform the works at the installation site of the wind turbine. Accordingly, it is possible to assemble the wind turbine efficiently.
(15) In some embodiments, in the above method (13) or (14), the embedding step includes embedding the cylindrical member by hitting a top portion of the cylindrical member. The method further comprises a step of covering the top portion of the hit cylindrical member with a cover member.

According to the above method (15), the top portion of the cylindrical member is covered with the cover member, and thus it is possible to protect the top portion of the cylindrical member from erosion.

Further, the top portion of the cylindrical member may deform from being hit upon installing the cylindrical member on ground or seabed. In this regard, with the above configuration (15), it is possible to fix the shape of the top portion of the cylindrical member by covering the top portion with the cover member. Accordingly, it is possible to avoid negative effects on works on the base structure caused by the shape (e.g. protrusion) of the top portion of the cylindrical member.

According to at least one embodiment of the present invention, provided is a wind-turbine tower, a wind turbine, and a method of assembling a wind-turbine tower, whereby it is possible to reliably support the tower while suppressing cost increase.

### BRIEF DESCRIPTION OF DRAWINGS

FIG. 1 is a schematic diagram of a configuration example of a wind turbine including a wind-turbine tower according to an embodiment.
FIG. 2 is a schematic diagram of a configuration example of a wind turbine including a wind-turbine tower according to an embodiment.
FIG. 3 is a cross-sectional view of a connection part between a tower body and a cylindrical member and its peripheral structure, in a wind-turbine tower according to an embodiment.
FIG. 4 is a cross-sectional view, taken along line IV-IV, of the wind-turbine tower depicted in FIG. 3.
FIG. 5 is a cross-sectional view of a connection part between a tower body and a cylindrical member and its peripheral structure, in a wind-turbine tower according to an embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

First, a wind-turbine tower according to some embodiments will be described, and then a method of assembling a wind-turbine tower according to some embodiments will be described.

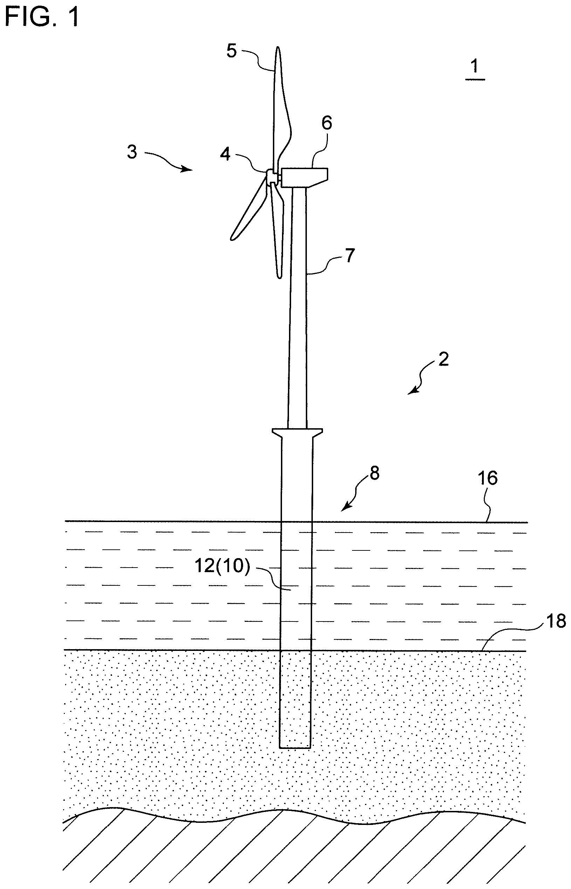

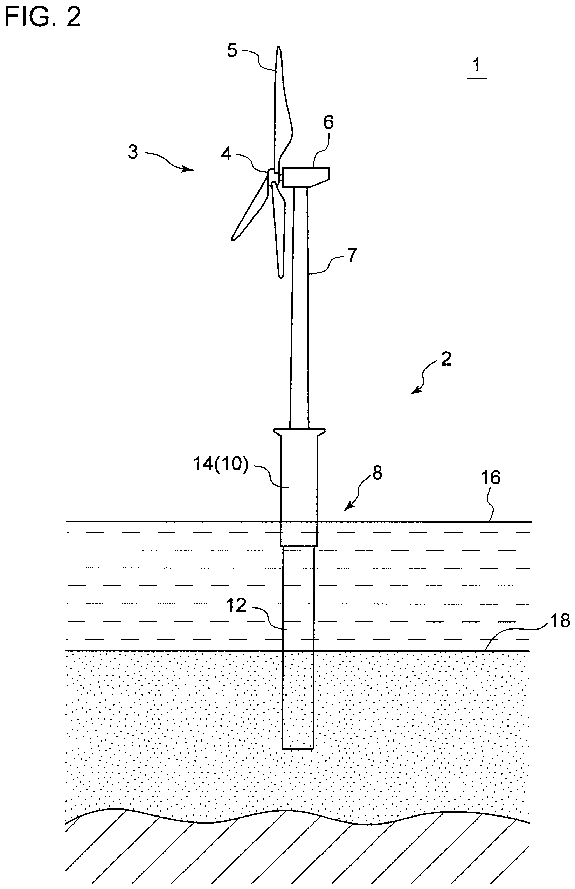

FIGs. 1 and 2 are each a schematic diagram of a configuration example of a wind turbine including a wind-turbine tower according to an embodiment. As depicted in FIGs. 1 and 2, the wind turbine 1 includes a wind-turbine tower 2, a nacelle 6 supported by the wind-turbine tower 2, and a wind turbine rotor 3 supported on the nacelle 6. The wind turbine rotor 3 is supported on the wind-turbine tower 2 via the nacelle 6. The wind turbine rotor 3 includes a hub 4 and at least one blade 5 mounted to the hub 4.

The wind turbine 1 may constitute a wind turbine power generating apparatus. In this case, the nacelle 6 may house a generator driven by rotational energy of the wind turbine rotor 3, a drive train for transmitting rotational energy of the wind turbine rotor 3 to the generator, or the like.

The wind-turbine tower 2 includes a base structure 8 and a tower body 7 erected on the base structure 8. In the embodiment depicted in FIGs. 1 and 2, the base structure 8 is partially embedded into a seabed 18. Furthermore, the tower body 7 is disposed so as to extend along the upward and downward direction above the base structure 8 on a water surface 16, and is supported by the base structure 8.

In some embodiments, the base structure 8 may be partially embedded in the ground to support the tower body 7 disposed on land.

In some embodiments, the base structure 8 includes a cylindrical member 10 provided along the upward and downward direction.

In the illustrative embodiment depicted in FIG. 1, the cylindrical member 10 is a monopile 12 partially embedded into the seabed 18. Further, in the illustrative embodiment depicted in FIG. 2, the cylindrical member 10 is a transition piece 14 disposed between the monopile 12 partially embedded into the seabed 18 and the tower body 7. In the embodiment depicted in FIG. 2, the tower body 7 is connected to the monopile 12 via the transition piece 14.

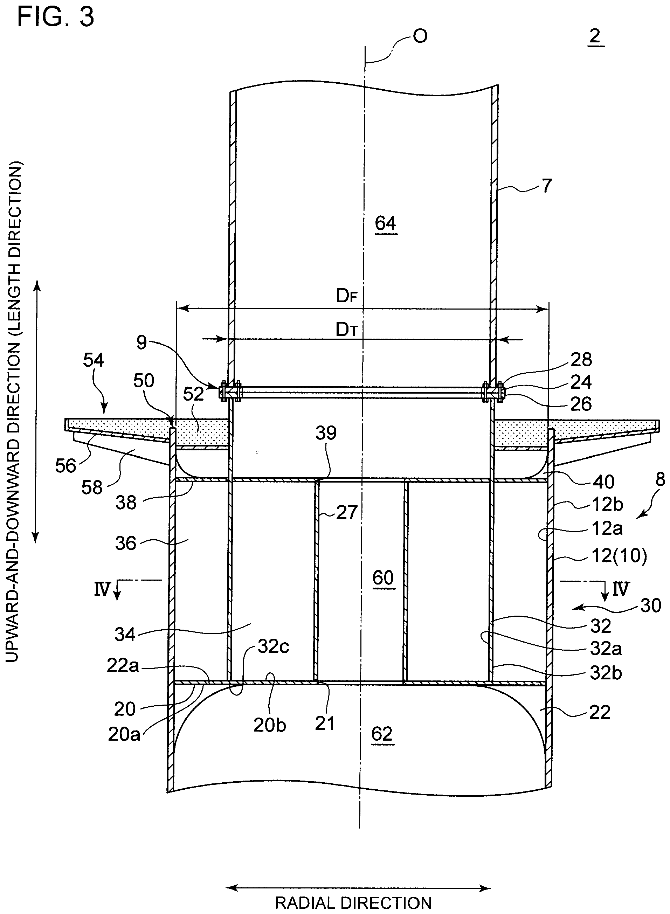

The wind-turbine tower 2 according to some embodiments will be described in detail with reference to FIGs. 3 to 5. Although the wind-turbine tower 2 described below as an example according to an embodiment includes the monopile 12 serving as the cylindrical member 10 of the base structure 8, as depicted in FIG. 1, the following description can be also applied to a wind-turbine tower 2 provided with a different member (such as the above described transition piece 14) as the cylindrical member 10.

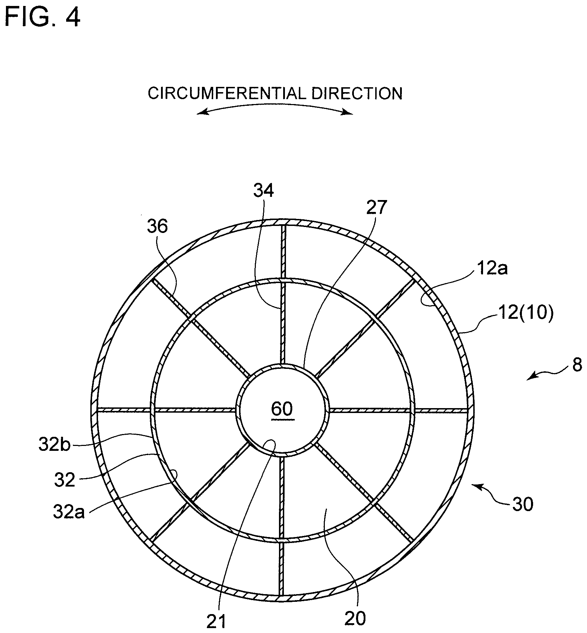

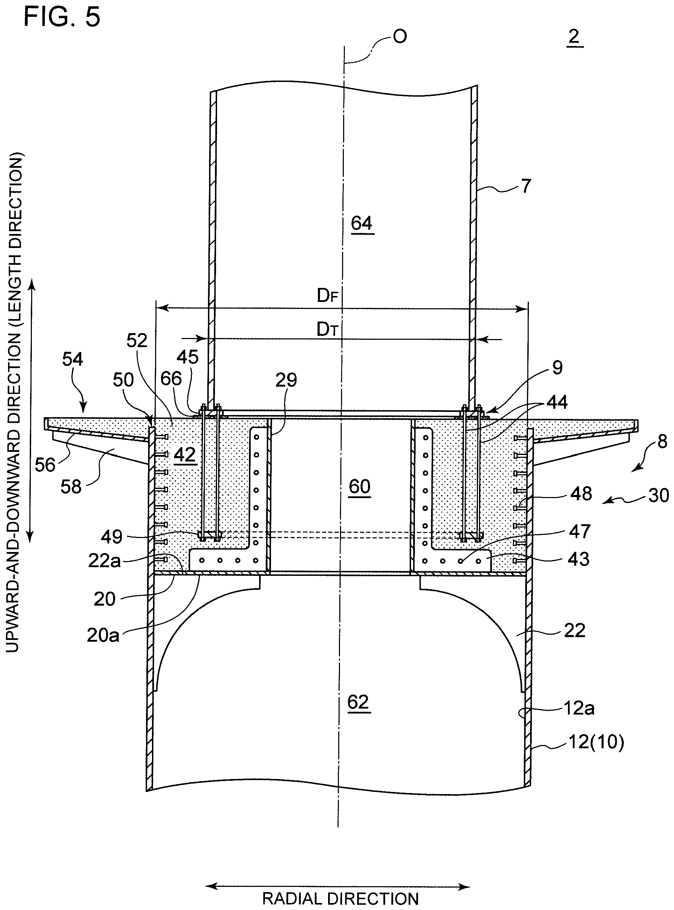

FIGs. 3 and 5 are each a cross-sectional view of a connection part between the tower body 7 and the monopile 12 (the cylindrical member 10) and its peripheral structure, in the wind-turbine tower 2 according to an embodiment. FIG. 4 is a cross-sectional view, taken along line IV-IV, of the wind-turbine tower 2 depicted in FIG. 3.

As depicted in FIGs. 3 to 5, in some embodiments, the base structure 8 includes the monopile 12, a bottom plate (stiffening plate) 20 mounted to an inner wall surface 12a of the monopile 12, and a load transmitting part 30 disposed between the bottom plate 20 and a root part 9 of the tower body 7 in the upward and downward direction.

The bottom plate 20 is mounted to the inner wall surface 12a of the monopile 12 so as to extend inward in the radial direction of the monopile 12. Further, the bottom plate 20 has a donut shape with an opening 21 formed in center.

Further, the bottom plate 20 is disposed in an upper section of the monopile 12 in the upward and downward direction. An upper section of the monopile 12 is a section of the monopile 12 closer to the tower body 7 in the length direction, for example, a 25% range from an end portion of the monopile 12 adjacent to the tower body 7.

The load transmitting part 30 is configured to transmit loads of the root part 9 of the tower body 7 to the monopile 12. The specific configuration of the load transmitting part 30 according to respective embodiments depicted in FIGs. 3 to 5 will be described later in detail.

The inner diameter D_{F} of the monopile 12 is greater than the outer diameter D_{T} of the root part 9 of the tower body 7.

As described above, the monopile 12 that receives loads of the root part 9 of the tower body 7 has the inner diameter D_{F} greater than the outer diameter D_{T} of the root part 9 of the tower body 7 (tower root part 9). Thus, as compared to a case where the monopile 12 has an inner diameter not greater than the outer diameter D_{T} of the tower root part 9, it is possible to maintain the strength of the monopile 12 while reducing the thickness of the monopile 12. Accordingly, it is possible to suppress cost increase.

Further, in the above embodiment, loads of the tower root part 9 are transmitted to the monopile 12 via the load transmitting part 30, which makes it possible to support the tower body 7 reliably. Thus, according to the above described embodiment, it is possible to support the tower body 7 reliably while suppressing cost increase.

In the illustrative embodiment depicted in FIGs. 3 and 4, the load transmitting part 30 includes a pipe-shaped member 32 disposed along the upward and downward direction, on the radially inner side of the monopile 12 and between the tower body 7 and the bottom plate 20. The pipe-shaped member 32 may be a steel pipe made from a steel material. The upper surface 20b of the bottom plate 20 and the lower end portion 32c of the pipe-shaped member 32 may be connected by welding. Further, the tower body 7 includes a tower-body side flange 24 disposed along the circumferential direction of the tower body 7 at the lower end of the tower root part 9, and the load transmitting part 30 includes a base-structure side flange 26 disposed along the circumferential direction of the pipe-shaped member 32 at the upper end portion of the pipe-shaped member 32 and connected to the tower-body side flange 24.

In this case, with a simple configuration connecting the tower-body side flange 24 and the base-structure side flange 26 disposed on the upper end portion of the pipe-shaped member 32 disposed between the tower body 7 and the bottom plate 20, it is possible to connect the tower body 7 and the base structure 8 and to transmit loads of the tower root part 9 received by the base-structure side flange 26 to the monopile 12 via the pipe-shaped member 32. Further, it is possible to transmit loads of the tower root part 9 more reliably to the monopile 12, and thus to support the tower body 7 more reliably.

In the example depicted in FIG. 3, the tower-body side flange 24 and the base-structure side flange 26 are connected by bolts 28.

The tower-body side flange 24 and the base-structure side flange 26 may be T-shape flanges disposed so as to protrude outward and inward in the radial direction of the tower body 7 or the pipe-shaped member 32, at the lower end of the tower root part 9 or the upper end portion of the monopile 12.

Further, a plurality of bolts 28 may be provided to connect the tower-body side flange 24 and the base-structure side flange 26, along the circumferential direction of the tower body 7 and the monopile 12.

In the illustrative embodiment depicted in FIGs. 3 and 4, the load transmitting part 30 further includes a second rib disposed on at least one of the inner wall surface 32a or the outer wall surface 32b of the pipe-shaped member 32, so as to extend in the upward-and-downward direction between the tower body 7 and the bottom plate 20.

In the embodiment depicted in FIGs. 3 and 4, the load transmitting part 30 includes a second rib 34 disposed on the inner wall surface 32a of the pipe-shaped member 32, and a second rib 36 disposed on the outer wall surface 32b of the pipe-shaped member 32.

As depicted in FIG. 4, a plurality of second ribs 34 and a plurality of second ribs 36 may be provided so as to extend radially along the radial direction of the monopile 12, around the center axis O of the monopile 12.

Accordingly, with the second ribs 34 or 36 extending in the upward and downward direction between the tower body 7 and the bottom plate 20, it is possible to transmit loads of the tower root part 9 to the monopile 12 via the pipe-shaped member 32 and the second ribs 34 or 36. Further, it is possible to transmit loads of the tower root part 9 more reliably to the monopile 12, and thus to support the tower body 7 more reliably.

In the illustrative embodiment depicted in FIGs. 3 and 4, the load transmitting part 30 may further include an upper stiffening plate 38 mounted to the inner wall surface 12a of the monopile 12 extending inward in the radial direction of the monopile 12, disposed between the bottom plate 20 and the tower root part 9 in the upward and downward direction. Further, the upper stiffening plate 38 depicted in FIGs. 3 and 4 has a donut shape with an opening 39 formed in center. Further, the upper end portions of the above described second ribs 34, 36 may be joined by welding or the like to the lower surface of the upper stiffening plate 38.

Further, the load transmitting part 30 may have a cylindrical wall 27 disposed along the axial direction of the monopile 12, radially inside the monopile 12. The cylindrical wall 27 may be disposed so as to extend between the bottom plate 20 and the upper stiffening plate 38.

The load transmitting part 30 may include a third rib 40 disposed so as to extend along the upward and downward direction above the upper stiffening plate 38, and to protrude inward in the radial direction from the inner wall surface 12a of the monopile 12. The lower end portion of the third rib 40 may be joined by welding or the like to the upper surface of the upper stiffening plate 38. A plurality of third ribs 40 may be provided so as to extend radially along the radial direction of the monopile 12, around the center axis O of the monopile 12.

Accordingly, the load transmitting part 30 has the upper stiffening plate 38, the cylindrical wall 27, or the third rib 40, and thereby it is possible to enhance rigidity of the base structure 8, and to support the tower body 7 more reliably.

In the illustrative embodiment depicted in FIG. 5, the load transmitting part 30 includes a concrete 42 casted between the tower body 7 and the bottom plate 20 at the radially inner side of the monopile 12, and anchor bolts 44 for transmitting loads of the tower body 7 to the concrete 42.

In this case, it is possible to transmit loads of the tower root part 9 to the monopile 12 via the anchor bolts and via the concrete 42 casted between the tower body 7 and the bottom plate 20. Accordingly, it is possible to transmit loads of the tower root part 9 reliably to the monopile 12, and thus to support the tower body 7 reliably.

The concrete 42 casted between the tower body 7 and the bottom plate 20 may be, for instance, a ferro-concrete or a fiber-reinforced concrete.

The concrete 42 may be disposed below the tower body 7, in a space surrounded by the inner wall surface 12a of the monopile 12, the bottom plate 20, and the cylindrical wall 29 disposed along the axial direction of the monopile 12 at the radially inner side of the monopile 12.

Further, in the embodiment illustrated in FIG. 5, the load transmitting part 30 further includes a shear key for transmitting loads from the concrete 42 to the monopile 12.

In the embodiment depicted in FIG. 5, stud dowels 48 and rib plates 43 are used as shear keys.

The stud dowels 48 are disposed so as to extend inward in the radial direction from the inner wall surface 12a of the monopile 12, and are joined by welding to the inner wall surface 12a of the monopile 12.

The rib plates 43 have an L shape and are disposed in a radial fashion so as to extend along the radial direction of the monopile 12, around the center axis O of the monopile 12. As depicted in FIG. 5, the rib plates 43 may have holes 47 formed thereon for letting thorough reinforcing bars.

If the load transmitting part 30 includes shear keys like the stud dowels 48 or the rib plates 43, loads of the tower root part 9 are transmitted to the monopile 12 from the concrete 42 via the shear keys. Thus, it is possible to transmit loads of the tower root part 9 more reliably to the monopile 12, and thus to support the tower body 7 more reliably.

Further, in the embodiment depicted in FIG. 5, an anchor plate 49 is disposed along the circumferential direction of the monopile 12, between the tower-body side flange 45 and the bottom plate 20 in the upward and downward direction. Furthermore, the tower body 7 has the tower-body side flange 45 disposed along the circumferential direction of the tower body 7 at the lower end of the tower root part 9, and the tower-body side flange 45 and the anchor plate 49 are connected with the anchor bolts 44.

Mounting the anchor plate 49 before casting the concrete 42 makes it possible to determine the position of the anchor bolts 44 appropriately upon casting the concrete 42.

Accordingly, loads of the tower root part 9 are transmitted reliably to the monopile 12 via the load transmitting part 30 described above, and thus it is possible to support the tower body 7 reliably.

In the illustrative embodiment depicted in FIGs. 3 to 5, the base structure 8 may include a first rib 22 disposed so as to extend along the upward and downward direction below the bottom plate 20, and to protrude inward in the radial direction from the inner wall surface 12a of the monopile 12. The lower surface 20a of the bottom plate 20 and the upper end portion 22a of the first rib 22 are joined to each other.

The base structure 8 may include a plurality of first ribs 22 provided so as to extend radially along the radial direction of the monopile 12, around the center axis O of the monopile 12.

The lower surface 20a of the bottom plate 20 and the upper end portion 22a of the first ribs 22 may be connected by welding.

With the first ribs 22, it is possible to transmit loads of the tower root part 9 received by the load transmitting part 30 smoothly to the monopile 12 via the first ribs 22.

In the embodiment depicted in FIGs. 3 to 5, the base structure 8 further includes a cover member 52 for covering the top portion 50 of the monopile 12.

With the cover member 52 covering the top portion 50 of the monopile 12, it is possible to protect the top portion 50 of the monopile from erosion.

Further, the top portion 50 of the monopile 12 may deform from being hit upon installing the monopile 12 on ground or seabed. In this regard, according to the above embodiment, since the top portion 50 of the monopile 12 is covered with the cover member 52, it is possible to fix the shape around the top portion 50 of the monopile 12. Accordingly, it is possible to perform works on the base structure 8 without being affected by the shape (e.g. Protrusion) of the top portion 50 of the monopile 12.

The cover member 52 may be made from mortar, concrete, fiber-reinforced concrete, or the like.

In the embodiment depicted in FIGs. 3 to 5, the base structure 8 further includes a brim portion 54 disposed so as to protrude outward in the radial direction of the monopile 12 from the top portion 50 of the monopile 12, and formed integrally with the cover member 52.

The brim portion 54 may be formed by casting mortar, concrete, fiber-reinforced concrete, or the like, into a space formed by a frame 56 disposed so as to protrude outward in the radial direction from the outer wall surface 12b of the monopile 12.

The brim portion 54 may be reinforced by ribs 58 provided so as to extend radially outward in the radial direction of the monopile 12.

With the brim portion 54 formed to protrude outward in the radial direction of the monopile 12 from the top portion 50 of the monopile 12, it is possible to use the brim portion 54 as a working space on the base structure 8.

In the embodiments depicted in FIGs. 3 to 5, the load transmitting part 30 has a space 60 disposed along the axial direction of the monopile 12. An inside space 62 below the bottom plate 20 of the monopile 12 and an inside space 64 of the tower body 7 are in communication with each other via the space 60.

With the inside space 62 below the bottom plate 20 of the monopile 12 and the inside space 64 of the tower body 7 being in communication with each other via the space 60 disposed inside the load transmitting part 30, it is possible to place or move devices and components between the inside of the tower body 7 and the inside space 62 below the bottom plate 20 of the monopile 12. For instance, it is possible to arrange power cables and communication cables from the space 64 inside the tower to the space below the base structure 8.

Next, a method of assembling the wind-turbine tower 2 having the above configuration will be described.

In some embodiments, a method of assembling the wind-turbine tower 2 according to some embodiments includes an embedding step of at least partially embedding the base structure 8 (monopile 12) into ground or seabed, a step of connecting the monopile 12 and the lower end portion of the tower body 7 to erect the tower body 7 on the base structure 8, and a step of forming the load transmitting part 30 for transmitting loads of the root part 9 of the tower body 7 to the monopile 12 between the bottom plate 20 and the root part 9 of the tower body 7.

In the embedding step, the monopile 12 may be embedded at least partially into ground or seabed by hitting the top portion 50 of the monopile 12 with a hummer or the like.

In an embodiment, in the step of erecting the tower body 7 on the base structure 8, as depicted in FIGs. 3 to 4, the tower body 7 may be erected on the base structure 8 by connecting the tower-body side flange 24 and the base-structure side flange 26 with bolts 28.

Alternatively, in an embodiment, in the step of erecting the tower body 7 on the base structure 8, as in the embodiment depicted in FIG. 5, the concrete 42 may be casted between the tower body 7 and the bottom plate 20 radially inside the monopile 12, after providing the anchor plate 49 along the circumferential direction of the monopile 12 between the tower-body side flange 45 and the bottom plate 20 in the upward and downward direction and mounting the anchor bolts 44 onto the anchor plate 49. The tower body 7 may be erected on the base structure 8 by connecting the tower-body side flange 45 disposed on the tower body 7 along the circumferential direction of the tower body 7 at the lower end of the tower root part 9 and the anchor plate 49 with the anchor bolts 44. At this time, after the tower body 7 is erected, grout 66 is applied between the tower root part 9 and the concrete 42, and the anchor bolts 44 are fastened after hardening of the grout 66.

The anchor plate 49 and the anchor bolts 44 may be assembled in advance on ground before being mounted to the bottom plate 20.

Further, if the concrete 42 is to be casted, reinforcing bars (not depicted) may be disposed between the tower body 7 and the bottom plate 20.

In an embodiment, before the embedding step, at least a part of the load transmitting part 30 may be formed inside the monopile 12. Specifically, before performing the embedding step, at least a part of the step of forming the load transmitting part 30 may be performed.

In this case, before the embedding step of embedding the base structure 8 into ground or seabed, at least a part of the load transmitting part 30 (e.g. the bottom plate 20, the pipe-shaped member 32 and the second ribs 34, 36 or the like depicted in FIGs. 3 and 4) is formed in advance inside the monopile 12. Thus, works for forming at least the above part of the load transmitting part 30 inside the monopile 12 can be performed in a production plant of the monopile 12, and it is no longer necessary to perform the works at the installation site of the wind turbine 1. Accordingly, it is possible to assemble the wind turbine 1 efficiently.

In an embodiment, the method may further include a step of embedding the monopile 12 by hitting the top portion 50 of the monopile 12 in the embedding step, and the method further includes covering the top portion 50 of the hit monopile 12 with the cover member 52.

The cover member 52 may be made from mortar, concrete, fiber-reinforced concrete, or the like.

With the cover member 52 covering the top portion 50 of the monopile 12, it is possible to protect the top portion 50 of the monopile from erosion.

Further, the top portion 50 of the monopile 12 may deform from being hit upon installing the monopile 12 on ground or seabed. In this regard, according to the above embodiment, since the top portion 50 of the monopile 12 is covered with the cover member 52, it is possible to fix the shape around the top portion 50 of the monopile 12. Accordingly, it is possible to perform works on the base structure 8 without being affected by the shape (e.g. protrusion) of the top portion 50 of the monopile 12.

Embodiments of the present invention were described in detail above, but the present invention is not limited thereto, and various amendments and modifications may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A wind-turbine tower (2), comprising:
a base structure (8); and
a tower body (7) to be erected on the base structure (8),
wherein the base structure (8) includes:
a cylindrical member (10;12) having an inner diameter (D_{F}) larger than an outer diameter (D_{T}) of a root part (9) of the tower body (7) and being disposed along an upward and downward direction; and
a stiffening plate (20) mounted to an inner wall surface (12a) of the cylindrical member (10;12) so as to extend inward in a radial direction of the cylindrical member (10;12);
**characterized in that**
the tower body (7) includes a tower-body side flange (24) disposed along a circumferential direction of the tower body (7) at a lower end of the root part (9) of the tower body (7), and
the base structure (8) further includes a load transmitting part (30), disposed between the stiffening plate (20) and the root part (9) of the tower body (7), for transmitting a load of the root part (9) of the tower body (7) to the cylindrical member (10;12),
wherein the load transmitting part (30) includes:
a pipe-shaped member (32) disposed along the upward and downward direction, at a radially inner side of the cylindrical member (10;12) and between the tower body (7) and the stiffening plate (30); and
a base-structure side flange (26) disposed on an upper end portion of the pipe-shaped member (32), the base-structure side flange (26) extending along a circumferential direction of the pipe-shaped member (32) and being engaged with the tower-body side flange (24).

2. The wind-turbine tower (2) according to claim 1,
wherein the load transmitting part (30) further includes a second rib (34,36) disposed on at least one of an inner wall surface (32a) or an outer wall surface (32b) of the pipe-shaped member (32), the second rib (34,36) extending in the upward and downward direction between the tower body (7) and the stiffening plate (20).

3. A wind-turbine tower (2), comprising:
a base structure (8); and
a tower body (7) to be erected on the base structure (8),
wherein the base structure (8) includes:
a cylindrical member (10;12) having an inner diameter (D_{F}) larger than an outer diameter (D_{T}) of a root part (9) of the tower body (7) and being disposed along an upward and downward direction; and
a stiffening plate (20) mounted to an inner wall surface (12a) of the cylindrical member (10;12) so as to extend inward in a radial direction of the cylindrical member (10;12);
**characterized in that**
the base structure (8) further includes a load transmitting part (30), disposed between the stiffening plate (20) and the root part (9) of the tower body (7), for transmitting a load of the root part (9) of the tower body (7) to the cylindrical member (10;12), and
the load transmitting part (30) further includes:
a concrete (42) casted between the tower body (7) and the stiffening plate (20), at a radially inner side of the cylindrical member (10;12); and
an anchor bolt (44) for transmitting loads of the tower body (7) to the concrete (42).

4. The wind-turbine tower (2) according to claim 3,
wherein the load transmitting part (30) further includes a shear key (43;48) for transmitting the loads from the concrete (42) to the cylindrical member (10;12).

5. The wind-turbine tower (2) according to any one of claims 1 to 4, further comprising
a first rib (22) extending along the upward and downward direction below the stiffening plate (20) and being disposed so as to protrude inward in the radial direction from the inner wall surface (12a) of the cylindrical member (10;12), and
wherein a lower surface (20a) of the stiffening plate (20) and an upper end portion (22a) of the first rib (22) are joined to each other.

6. The wind-turbine tower (2) according to any one of claims 1 to 5,
wherein the base structure (8) further includes a cover member (52) for covering a top portion (50) of the cylindrical member (10;12).

7. The wind-turbine tower (2) according to claim 6,
wherein the base structure (8) further includes a brim portion (54) disposed so as to protrude outward in a radial direction of the cylindrical member (10;12) from the top portion (50) of the cylindrical member (10;12), and formed integrally with the cover member (52).

8. The wind-turbine tower (2) according to any one of claims 1 to 7,
wherein the load transmitting part (30) has a space (60) disposed along an axial direction of the cylindrical member (10;12), and
wherein an inside space (62) below the stiffening plate (20) of the cylindrical member (10;12) and an inside space (64) of the tower body (7) are in communication with each other via the space (60) inside the load transmitting part (30) .

9. The wind-turbine tower (2) according to any one of claims 1 to 8,
wherein the cylindrical member (10) comprises a monopile (12) at least partially embedded into ground or seabed.

10. The wind-turbine tower (2) according to any one of claims 1 to 8,
wherein the cylindrical member (10) comprises a transition piece (14) disposed between the tower body (7) and a monopile (12) at least partially embedded into ground or seabed.

11. A wind turbine (1), comprising:
a wind-turbine tower (2) according to any one of claims 1 to 10; and
a wind turbine rotor (3) supported to the wind-turbine tower (2).

12. A method of assembling a wind-turbine tower (2) including a base structure (8) and a tower body (7), the base structure (8) including a cylindrical member (10;12) having an inner diameter (D_{F}) greater than an outer diameter (D_{T}) of a root part (9) of the tower body (7) and being disposed along an upward and downward direction, and a stiffening plate (20) disposed on an inner wall surface (12a) of the cylindrical member (10;12), the method comprising:
an embedding step of embedding the base structure (8) at least partially into ground or seabed;
a step of connecting the cylindrical member (10;12) and a lower end portion of the tower body (7), and erecting the tower body (7) on the base structure (8); and
a step of forming a load transmitting part (30) for transmitting loads of the root part (9) of the tower body (7) to the cylindrical member (10;12) between the stiffening plate (20) and the root part (9) of the tower body (7),
wherein the tower body (7) includes a tower-body side flange (24) disposed along a circumferential direction of the tower body (7) at a lower end of the root part (9) of the tower body (7), and
wherein the load transmitting part (30) includes:
a pipe-shaped member (32) disposed along the upward and downward direction, at a radially inner side of the cylindrical member (10;12) and between the tower body (7) and the stiffening plate (30); and
a base-structure side flange (26) disposed on an upper end portion of the pipe-shaped member (32), the base-structure side flange (26) extending along a circumferential direction of the pipe-shaped member (32) and being engaged with the tower-body side flange (24).

13. A method of assembling a wind-turbine tower (2) including a base structure (8) and a tower body (7), the base structure (8) including a cylindrical member (10;12) having an inner diameter (D_{F}) greater than an outer diameter (D_{T}) of a root part (9) of the tower body (7) and being disposed along an upward and downward direction, and a stiffening plate (20) disposed on an inner wall surface (12a) of the cylindrical member (10;12), the method comprising:
an embedding step of embedding the base structure (8) at least partially into ground or seabed;
a step of connecting the cylindrical member (10;12) and a lower end portion of the tower body (7), and erecting the tower body (7) on the base structure (8); and
a step of forming a load transmitting part (30) for transmitting loads of the root part (9) of the tower body (7) to the cylindrical member (10;12) between the stiffening plate (20) and the root part (9) of the tower body (7),
wherein the load transmitting part (30) further includes:
a concrete (42) casted between the tower body (7) and the stiffening plate (20), at a radially inner side of the cylindrical member (10;12); and
an anchor bolt (44) for transmitting loads of the tower body (7) to the concrete (42).

14. The method of assembling a wind-turbine tower (2) according to claim 12 or 13, further comprising
a step of forming at least a part of the load transmitting part (30) inside the cylindrical member (10;12), before the embedding step.

15. The method of assembling a wind-turbine tower (2) according to claim 12, 13 or 14,
wherein the embedding step includes embedding the cylindrical member (10;12) by hitting a top portion (50) of the cylindrical member (10;12), and
wherein the method further comprises a step of covering the top portion (50) of the cylindrical member (10;12) after being hit with a cover member (52).

## Patentansprüche

1. Ein Windturbinenturm (2) mit:
einer Basisstruktur (8), und
einem Turmkörper (7), der auf der Basisstruktur (8) aufzurichten ist,
wobei die Basisstruktur (8) aufweist:
ein zylindrisches Element (10;12) mit einem Innendurchmesser (D_{F}), der größer ist als ein Außendurchmesser (D_{T}) eines Fußteils (9) des Turmkörpers (7) und das entlang einer Aufwärts-und-Abwärtsrichtung angeordnet ist, und
eine Versteifungsplatte (20), die an einer Innenwandoberfläche (12a) des zylindrischen Elements (10;12) so angebracht ist, dass sie sich in einer Radialrichtung des zylindrischen Elements (10;12) nach innen erstreckt,
**dadurch gekennzeichnet, dass**
der Turmkörper (7) einen Turmkörper-Seitenflansch (24) aufweist, der entlang einer Umfangsrichtung des Turmkörpers (7) an einem unteren Ende des Fußteils (9) des Turmkörpers (7) angeordnet ist, und
die Basisstruktur (8) ferner ein Lastübertragungsteil (30) aufweist, das zwischen der Versteifungsplatte (20) und dem Fußteil (9) des Turmkörpers (7) angeordnet ist, zum Übertragen einer Last des Fußteils (9) des Turmkörpers (7) zu dem zylindrischen Element (10;12),
wobei das Lastübertragungsteil (30) aufweist:
ein rohrförmiges Element (32), das entlang der Aufwärts-und-Abwärtsrichtung angeordnet ist, an einer radial inneren Seite des zylindrischen Elements (10;12) und zwischen dem Turmkörper (7) und der Versteifungsplatte (30), und
einen Basisstruktur-Seitenflansch (26), der an einem oberen Endabschnitt des rohrförmigen Elements (32) angeordnet ist, wobei sich der Basisstruktur-Seitenflansch (26) entlang einer Umfangsrichtung des rohrförmigen Elements (32) erstreckt und mit dem Turmkörper-Seitenflansch (24) in Eingriff ist.

2. Der Windturbinenturm (2) gemäß Anspruch 1,
wobei das Lastübertragungsteil (30) ferner eine zweite Rippe (34,36) aufweist, die an zumindest einem von einer inneren Wandoberfläche (32a) oder einer äußeren Wandoberfläche (32b) des rohrförmigen Elements (32) angeordnet ist, wobei die zweite Rippe (34,36) sich in der Aufwärts-und-Abwärtsrichtung zwischen dem Turmkörper (7) und der Versteifungsplatte (20) erstreckt.

3. Ein Windturbinenturm (2) mit:
einer Basisstruktur (8), und
einem Turmkörper (7), der auf der Basisstruktur (8) aufzurichten ist,
wobei die Basisstruktur (8) aufweist:
ein zylindrisches Element (10;12) mit einem Innendurchmesser (D_{F}), der größer ist als ein Außendurchmesser (D_{T}) eines Fußteils (9) des Turmkörpers (7) und das entlang einer Aufwärts-und-Abwärtsrichtung angeordnet ist, und
eine Versteifungsplatte (20), die an einer Innenwandoberfläche (12a) des zylindrischen Elements (10;12) so angebracht ist, dass sie sich in einer Radialrichtung des zylindrischen Elements (10;12) nach innen erstreckt,
**dadurch gekennzeichnet, dass**
die Basisstruktur (8) ferner ein Lastübertragungsteil (30) aufweist, das zwischen der Versteifungsplatte (20) und dem Fußteil (9) des Turmkörpers (7) angeordnet ist, zum Übertragen einer Last des Fußteils (9) des Turmkörpers (7) zu dem zylindrischen Element (10;12), und
das Lastübertragungsteil (30) aufweist:
ein Betonteil (42), das zwischen dem Turmkörper (7) und der Versteifungsplatte (20) an einer radial inneren Seite des zylindrischen Elements (10;12) gegossen ist, und
einen Ankerbolzen (44) zum Übertragen von Lasten des Turmkörpers (7) auf das Betonteil (42).

4. Der Windturbinenturm (2) gemäß Anspruch 3,
wobei das Lastübertragungsteil (30) ferner eine Scherkraftverzahnung (43;48) zum Übertragen der Lasten von dem Betonteil (42) auf das zylindrische Element (10;12) aufweist.

5. Der Windturbinenturm (2) gemäß einem der Ansprüche 1 bis 4, ferner mit
einer ersten Rippe (22), die sich entlang der Aufwärts-und-Abwärtsrichtung unter der Versteifungsplatte (20) erstreckt und so angeordnet ist, dass sie in der Radialrichtung von der inneren Wandoberfläche (12a) des zylindrischen Elements (10;12) nach innen vorsteht, und
wobei eine untere Oberfläche (20a) der Versteifungsplatte (20) und ein oberer Endabschnitt (22a) der ersten Rippe (22) miteinander verbunden sind.

6. Der Windturbinenturm (2) gemäß einem der Ansprüche 1 bis 5,
wobei die Basisstruktur (8) ferner ein Abdeckelement (52) zum Abdecken eines oberen Abschnitts (50) des zylindrischen Elements (10;12) aufweist.

7. Der Windturbinenturm (2) gemäß Anspruch 6,
wobei die Basisstruktur (8) ferner einen Krempenabschnitt (54) aufweist, der so angeordnet ist, dass er in einer Radialrichtung des zylindrischen Elements (10;12) von dem oberen Abschnitt (50) des zylindrischen Elements (10;12) nach außen vorsteht, und der integral mit dem Abdeckelement (52) ausgebildet ist.

8. Der Windturbinenturm (2) gemäß einem der Ansprüche 1 bis 7,
wobei das Lastübertragungsteil (30) einen Raum (60) aufweist, der entlang einer Axialrichtung des zylindrischen Elements (10;12) angeordnet ist, und
wobei ein Innenraum (62) unter der Versteifungsplatte (20) des zylindrischen Elements (10;12) und ein Innenraum (64) des Turmkörpers (7) über dem Raum (60) im Inneren des Lastübertragungsteils (30) in Verbindung miteinander sind.

9. Der Windturbinenturm (2) gemäß einem der Ansprüche 1 bis 8,
wobei das zylindrische Element (10) einen Monopile (12) aufweist, der zumindest teilweise im Grund oder Seeboden eingebettet ist.

10. Der Windturbinenturm (2) gemäß einem der Ansprüche 1 bis 8,
wobei das zylindrische Element (10) ein Übergangsstück (14) aufweist, das zwischen dem Turmkörper (7) und einem Monopile (12), der zumindest teilweise im Grund oder Seeboden eingebettet ist, angeordnet ist.

11. Eine Windturbine (1), mit:
einem Windturbinenturm (2) gemäß einem der Ansprüche 1 bis 10, und
einem Windturbinenrotor (3), der an dem Windturbinenturm (2) getragen ist.

12. Ein Verfahren zum Zusammenbauen eines Windturbinenturms (2) mit einer Basisstruktur (8) und einem Turmkörper (7), wobei die Basisstruktur (8) ein zylindrisches Element (10;12) mit einem Innendurchmesser (D_{F}), der größer ist als ein Außendurchmesser (D_{T}) eines Fußteils (9) des Turmkörpers (7), und der entlang einer Aufwärts-und-Abwärtsrichtung angeordnet ist, und eine Versteifungsplatte (20), die an einer inneren Wandoberfläche (12a) des zylindrischen Elements (10;12) angeordnet ist, aufweist, wobei das Verfahren aufweist:
einen Einbettungsschritt des Einbettens der Basisstruktur (8) zumindest teilweise im Grund oder Seeboden,
einen Schritt des Verbindens des zylindrischen Elements (10;12) und eines unteren Endabschnitts des Turmkörpers (7) und des Aufrichtens des Turmkörpers (7) auf der Basisstruktur (8), und
einen Schritt des Ausbildens eines Lastübertragungsteils (30) zum Übertragen von Lasten des Fußteils (9) des Turmkörpers (7) auf das zylindrische Element (10;12) zwischen der Versteifungsplatte (20) und dem Fußteil (9) des Turmkörpers (7),
wobei der Turmkörper (7) einen Turmkörperseitigen Flansch (24) aufweist, der entlang einer Umfangsrichtung des Turmkörpers (7) an einem unteren Ende des Fußteils (9) des Turmkörpers (7) angeordnet ist, und
wobei das Lastübertragungsteil (30) aufweist:
ein rohrförmiges Element (32), das entlang der Aufwärts-und-Abwärtsrichtung angeordnet ist, an einer radial inneren Seite des zylindrischen Elements (10;12) und zwischen dem Turmkörper (7) und der Versteifungsplatte (30), und
einen Basisstruktur-Seitenflansch (26), der an einem oberen Endabschnitt des rohrförmigen Elements (32) angeordnet ist, wobei sich der Basisstruktur-Seitenflansch (26) entlang einer Umfangsrichtung des rohrförmigen Elements (32) erstreckt und mit dem Turmkörper-Seitenflansch (24) in Eingriff ist.

13. Ein Verfahren zum Zusammenbauen eines Windturbinenturms (2) mit einer Basisstruktur (8) und einem Turmkörper (7), wobei die Basisstruktur (8) ein zylindrisches Element (10;12) mit einem Innendurchmesser (D_{F}), der größer ist als ein Außendurchmesser (D_{T}) eines Fußteils (9) des Turmkörpers (7), und der entlang einer Aufwärts-und-Abwärtsrichtung angeordnet ist, und eine Versteifungsplatte (20), die an einer inneren Wandoberfläche (12a) des zylindrischen Elements (10;12) angeordnet ist, aufweist, wobei das Verfahren aufweist:
einen Einbettungsschritt des Einbettens der Basisstruktur (8) zumindest teilweise im Grund oder Seeboden,
einen Schritt des Verbindens des zylindrischen Elements (10;12) und eines unteren Endabschnitts des Turmkörpers (7) und des Aufrichtens des Turmkörpers (7) auf der Basisstruktur (8), und
einen Schritt des Ausbildens eines Lastübertragungsteils (30) zum Übertragen von Lasten des Fußteils (9) des Turmkörpers (7) zu dem zylindrischen Element (10;12) zwischen der Versteifungsplatte (20) und dem Fußteil (9) des Turmkörpers (7),
wobei das Lastübertragungsteil (30) aufweist:
ein Betonteil (42), das zwischen dem Turmkörper (7) und der Versteifungsplatte (20) an einer radial inneren Seite des zylindrischen Elements (10;12) gegossen ist, und
einen Ankerbolzen (44) zum Übertragen von Lasten des Turmkörpers (7) auf das Betonteil (42).

14. Verfahren zum Zusammenbauen eines Windturbinenturms (2) gemäß Anspruch 12 oder 13, ferner mit
einem Schritt des Ausbildens zumindest eines Teils des Lastübertragungsteils (30) im inneren des zylindrischen Elements (10;12), vor dem Einbettungsschritt.

15. Das Verfahren zum Zusammenbauen eines Windturbinenturms (2) gemäß Anspruch 12, 13 oder 14,
wobei der Einbettungsschritt ein Einbetten des zylindrischen Elements (10;12) durch Schlagen auf einen oberen Abschnitt (50) des zylindrischen Elements (10;12) aufweist, und
wobei das Verfahren ferner einen Schritt des Abdeckens des oberen Abschnitts (50) des zylindrischen Elements (10;12), nachdem dieser geschlagen wurde, mit einem Abdeckelement (52) aufweist.

## Revendications

1. Tour (2) d'éolienne, comprenant :
une structure (8) de base et
un corps (7) de tour à ériger sur la structure (8) de base, la structure (8) de base comprenant :
un élément (10; 12) cylindrique, ayant un diamètre (D_{F}) intérieur plus grand qu'un diamètre (D_{T}) extérieur d'une partie (9) de pied du corps (7) de la tour et disposé suivant une direction allant vers le haut et vers le bas et
une plaque (20) de raidissement, montée sur une surface (12a) de paroi intérieure de l'élément (10; 12) cylindrique, de manière à s'étendre vers l'intérieur dans une direction radiale de l'élément (10; 12) cylindrique ;
**caractérisée en ce que**
le corps (7) de la tour comprend une bride (24) latérale du corps de la tour, disposée dans une direction circonférentielle du corps (7) de la tour, à l'extrémité inférieure de la partie (9) de pied du corps (7) de la tour et
la structure (8) de base comprend, en outre, une partie (30) de transmission de charge, disposée entre la plaque (20) de raidissement et la partie (9) de pied du corps (7) de la tour pour transmettre une charge de la partie (9) de pied du corps (7) de la tour à l'élément (10; 12) cylindrique,
dans laquelle la partie (30) de transmission de charge comprend :
un élément (32) en forme de tuyau, disposé suivant la direction allant vers le haut et vers le bas, à un côté intérieur radialement de l'élément (10; 12) cylindrique et entre le corps (7) de la tour et la plaque (30) de raidissement et
une bride (26) latérale de la structure de base, disposée sur une partie d'extrémité supérieure de l'élément (32) en forme de tuyau, la bride (26) latérale de la structure de base s'étendant suivant une direction circonférentielle de l'élément (32) en forme de tuyau et étant enclenchée avec la bride (24) latérale du corps de la tour.

2. Tour (2) d'éolienne suivant la revendication 1,
dans laquelle la partie (30) de transmission de charge comprend, en outre, une deuxième nervure (34, 36), disposée sur au moins l'une d'une surface (32a) de paroi intérieure ou d'une surface (32b) de paroi extérieur de l'élément (32) en forme de tuyau, la deuxième nervure (34, 36) s'étendant dans les directions allant vers le haut et vers le bas entre le corps (7) de la tour et la plaque (20) de raidissement.

3. Tour (2) d'éolienne comprenant :
une structure (8) de base et
un corps (7) de tour à ériger sur la structure (8) de base, la structure (8) de base comprenant :
un élément (10; 12) cylindrique, ayant un diamètre (D_{F}) intérieur plus grand qu'un diamètre (D_{T}) extérieur d'une partie (9) de pied du corps (7) de la tour et disposé suivant une direction allant vers le haut et vers le bas et
une plaque (20) de raidissement, montée sur une surface (12a) de paroi intérieure de l'élément (10; 12) cylindrique, de manière à s'étendre vers l'intérieur dans une direction radiale de l'élément (10; 12) cylindrique ;
**caractérisée en ce que**
la structure (8) de base comprend, en outre, une partie (30) de transmission d'une charge, disposée entre la plaque (20) de raidissement et la partie (9) de pied du corps (7) de la tour, pour transmettre une charge de la partie (9) de pied du corps (7) de la tour à l'élément (10; 12) cylindrique et
la partie (30) de transmission de charge comprend, en outre :
un bétonnage (42) coulé entre le corps (7) de la tour et la plaque (20) de raidissement à un côté intérieur radialement de l'élément (10; 12) cylindrique et
un boulon (44) d'ancrage pour transmettre des charges du corps (7) de la tour au bétonnage (42).

4. Tour (2) d'éolienne suivant la revendication 3,
dans laquelle la partie (30) de transmission d'une charge comprend, en outre, une clavette (43; 48) de cisaillement pour transmettre les charges du bétonnage (42) à l'élément (10; 12) cylindrique.

5. Tour (2) d'éolienne suivant l'une quelconque des revendications 1 à 4, comprenant, en outre
une première nervure (22) s'étendant suivant la direction vers le haut et vers le bas en dessous de la plaque (20) de raidissement et disposée de manière à faire saillie vers l'intérieur dans la direction radiale à partir de la surface (12a) de paroi intérieure de l'élément (10; 12) cylindrique et dans laquelle une surface (20a) intérieure de la plaque (20) de raidissement et une partie (22a) d'extrémité supérieure de la première nervure (22) sont jointes l'une à l'autre.

6. Tour (2) d'éolienne suivant l'une quelconque des revendications 1 à 5,
dans laquelle la structure (8) de base comprend, en outre, un élément (52) de recouvrement pour recouvrir une partie (50) de sommet de l'élément (10; 12) cylindrique.

7. Tour (2) d'éolienne suivant la revendication 6,
dans laquelle la structure (8) de base comprend, en outre, une partie (54) de bord, disposée de manière à faire saillie vers l'extérieur dans une direction radiale de l'élément (10; 12) cylindrique à partir de la partie (50) de sommet de l'élément (10; 12) cylindrique et faisant partie intégrante de l'élément (52) de recouvrement.

8. Tour (2) d'éolienne suivant l'une quelconque des revendications 1 à 7,
dans laquelle la partie (30) transmettant une charge a un espace disposé suivant une direction axiale de l'élément (10; 12) cylindrique et
dans laquelle un espace (62) à l'intérieur, en dessous de la plaque (20) de raidissement, de l'élément (10; 12) cylindrique et un espace (64) à l'intérieur du corps (7) de la tour communiquent l'un avec l'autre par l'intermédiaire de l'espace (60) à l'intérieur de la partie (30) de transmission d'une charge.

9. Tour (2) d'éolienne suivant l'une quelconque des revendications 1 à 8,
dans laquelle l'élément (10) cylindrique comprend une monopile (12) incorporée, au moins en partie, dans le sol ou dans un fond marin.

10. Tour (2) d'éolienne suivant l'une quelconque des revendications 1 à 8,
dans laquelle l'élément (10) cylindrique comprend une pièce (14) à transition disposée entre le corps (7) de la tour et une monopile (12) incorporée, au moins en partie, dans le sol ou un fond marin.

11. Eolienne (1), comprenant :
une tour (2) d'éolienne suivant l'une quelconque des revendications 1 à 10 et
une roue (3) d'éolienne supportée par la tour (2) d'éolienne.

12. Procédé d'assemblage d'une tour (2) d'éolienne, comprenant une structure (8) de base et un corps (7) de tour, la structure (8) de base comprenant un élément (10; 12) cylindrique ayant un diamètre (D_{F}) intérieur plus grand qu'un diamètre (D_{T}) extérieur d'une partie (9) de pied du corps (7) de la tour et étant disposé vers le haut et vers le bas et une plaque (20) de raidissement disposée sur une surface (12a) de paroi intérieure de l'élément (10; 12) cylindrique, le procédé comprenant :
un stade d'incorporation, dans lequel on incorpore la structure (8) de base, au moins en partie, dans le sol ou dans un fond marin;
un stade de liaison de l'élément (10; 12) cylindrique et d'une partie d'extrémité inférieure du corps (7) de la tour et d'érection du corps (7) de la tour sur la structure (8) de base et
un stade de formation d'une partie (30) de transmission de charge pour transmettre des charges de la partie (9) de pied du corps (7) de la tour à l'élément (10; 12) cylindrique entre la plaque (20) de raidissement et la partie (9) de pied du corps (7) de la tour,
dans lequel le corps (7) de la tour comprend une bride (24) latérale du corps de la tour, disposée dans une direction circonférentielle du corps (7) de la tour, à l'extrémité inférieure de la partie (9) de pied du corps (7) de la tour et
dans lequel la partie (30) de transmission de charge comprend :
un élément (32) en forme de tuyau, disposé suivant la direction allant vers le haut et vers le bas, à un côté intérieur radialement de l'élément (10; 12) cylindrique et entre le corps (7) de la tour et la plaque (30) de raidissement et
une bride (26) latérale de la structure de base, disposée sur une partie d'extrémité supérieure de l'élément (32) en forme de tuyau, la bride (26) latérale de la structure de base s'étendant suivant une direction circonférentielle de l'élément (32) en forme de tuyau et étant enclenchée avec la bride (24) latérale du corps de la tour.

13. Procédé d'assemblage d'une tour (2) d'éolienne comprenant une structure (8) de base et un corps (7) de tour, la structure (8) de base comprenant un élément (10; 12) cylindrique ayant un diamètre (D_{F}) intérieur plus grand qu'un diamètre (D_{T}) extérieur d'une partie (9) de pied du corps (7) de la tour et étant disposé suivant une direction vers le haut et vers le bas et une plaque (20) de raidissement disposée sur une surface (12a) de paroi intérieure de l'élément (10; 12) cylindrique, le procédé comprenant :
un stade d'incorporation, dans lequel on incorpore la structure (8) de base, au moins en partie, dans le sol ou dans un fond marin ;
un stade de liaison de l'élément (10; 12) cylindrique et d'une partie d'extrémité inférieure du corps (7) de la tour et d'érection du corps (7) de la tour sur la structure (8) de base et
un stade de formation d'une partie (30) de transmission de charge pour transmettre des charges de la partie (9) de pied du corps (7) de la tour à l'élément (10; 12) cylindrique entre la plaque (20) de raidissement et la partie (9) de pied du corps (7) de la tour,
dans lequel la partie (30) de transmission de charge comprend, en outre :
un bétonnage (42) coulé entre le corps (7) de la tour et la plaque (20) de raidissement à un côté intérieur radialement de l'élément (10; 12) cylindrique et
un boulon (44) d'ancrage pour transmettre des charges du corps (7) de la tour au bétonnage (42).

14. Procédé d'assemblage d'une tour (2) d'éolienne suivant la revendication 12 ou 13, comprenant, en outre
un stade de formation d'au moins une partie de la partie (30) de transmission de charge à l'intérieur de l'élément (10; 12) cylindrique avant le stade d'incorporation.

15. Procédé d'assemblage d'une tour (2) d'éolienne suivant la revendication 12, 13 ou 14,
dans lequel le stade d'incorporation comprend l'incorporation de l'élément (10; 12) cylindrique en frappant une partie (50) de sommet de l'élément (10; 12) cylindrique et
dans lequel le procédé comprend, en outre, un stade de recouvrement de la partie (50) de sommet de l'élément (10; 12) cylindrique par un élément (52) de recouvrement après avoir été frappé.
